# NOUVEAU FASCICULE DE BREVET EUROPEEN

(11) **EP 1 088 176 B2**
(45) Date de publication et mention de la décision concernant l'opposition: **23.01.2008**
(45) Mention de la délivrance du brevet: 12.11.2003
(21) Numéro de dépôt: 00917176.0
(22) Date de dépôt: 11.04.2000
(51) Int. Cl.: F16D 69/02

(54) **PROCEDE DE FABRICATION D'UN MATERIAU DE FRICTION ET NOTAMMENT D'UNE COURONNE DE FRICTION D'EMBRAYAGE**
VERFAHREN ZUR HERSTELLUNG EINES REIBMATERIALS INSBESONDERE FÜR DEN REIBUNGSRING EINER KUPPLUNGSSCHEIBE
METHOD FOR PRODUCING A FRICTION MATERIAL FOR A FRICTION GEAR IN A CLUTCH

(30) Priorité: 16.04.1999 FR 9905150
(43) Date de publication de la demande: 04.04.2001
(73) Titulaire: Valeo Matériaux de Friction, 87020 Limoges cedex 9 (FR)
(72) Inventeur: BIOT, Christian, F-87410 Le Palais sur Vienne (FR)
(74) Mandataire: Doressamy, Clarisse
(86) Numéro de dépôt international: PCT/FR2000/000913
(87) Numéro de publication internationale: WO 2000/063577

(56) Documents cités:
- GB-A- 2 054 626
- US-A- 4 118 528
- Kunststoff Handbuch 10 - Duroplaste, Herausgeber: Professor Dr. W. Woebcken, München, Wien: Hanser 1988
- Broschüre "Leitfaden Produktauswahl Anwendung Bakelite-Phenolharze" , Bakelite AG, D-58609, Seiten 103-104
- Handbuch für die Gummi-Industrie, 2. Auflage. Bearbeiter: T. Kempermann; Herausgeber. Bayer AG, D-5090 Leverkusen

## Description

La présente invention concerne un procédé de fabrication d'un matériau de friction et plus particulièrement d'une couronne de friction pour disque de friction d'embrayage. Plus particulièrement, la couronne de friction pour disque de friction d'embrayage et du type frottement à sec.

Une telle couronne de friction est réalisée à partir de fil à base notamment de fibres minérales telles que des fibres de verre, qui assurent la résistance à la force centrifuge, de caoutchouc pour l'obtention d'un bon coefficient de frottement, de charges diverses et d'un liant, en pratique une résine phénolique, pour rendre le tout cohérent.

Lors de la fabrication de la couronne il est usuel d'utiliser des solvants chlorés, en particulier pour dissoudre le caoutchouc.

Le problème qui se pose lors de l'utilisation de tels solvants chlorés est leur aspect nocif qui nécessite, par conséquent, la mise en place d'opérations de confinement et de récupération afin d'éviter tout contact avec les opérateurs et tout rejet dans l'atmosphère.

Afin de surmonter ce problème, il est connu de remplacer ces solvants chlorés par de l'eau. Ceci nécessite d'utiliser du latex plutôt que des caoutchoucs secs. En pratique un ciment aqueux est réalisé qui résulte du mélange dans de l'eau de résines phénoliques, de charges, notamment sous forme de poudres, et de latex. Ce ciment est ensuite utilisé pour imprégner un fil constitué de fibres minérales et autres qui sert à former une ébauche cuite ensuite sous pression pour former une couronne de friction. La demanderesse a constaté que le ciment aqueux présente une viscosité qui augmente rapidement au cours du temps. Cela a pour conséquences, d'une part, une courte durée pendant laquelle le ciment est utilisable et, d'autre part, des variations dans les caractéristiques de frottement et de résistance à l'usure des couronnes de frottement ensuite réalisées. L'adjonction de résine phénolique en poudre dans le mélange contenant du latex provoque l'absorption de l'eau de constitution du latex, conduisant à une augmentation rapide de la viscosité et rendant impropre le ciment pour l'imprégnation d'un fil.

Le document US-A-4.118.528 divulgue un procédé de fabrication de garniture de friction qui utilise des mèches de fibres continues de verre à la fois comme matériau de renforcement et de friction et plus particulièrement l'utilisation de composé non anionique comme surfactant.

Dans le document GB-A-2.054.626, correspondant au préambule de la revendication 1, le ciment d'imprégnation aqueux contient au moins un composé du type surfactant.

Néanmoins un problème peut se poser car les particules, que comporte le ciment, peuvent s'agglomérer.

L'invention propose pour résoudre ce problème d'utiliser le procédé selon la revendication 1 pour stabiliser les mélanges aqueux pour couronnes d'embrayage contenant des mélanges de latex de résines phénoliques, de mélanine formol et de diverses poudres organiques et minérales.

Plus précisément, la présente invention a pour objet procédé de fabrication d'un matériau de friction, plus particulièrement d'une couronne de friction pour disque de friction d'embrayage travaillant à sec, comportant une opération d'imprégnation d'un fil à base notamment de fibres minérales telles que des fibres de verre, au moyen d'un ciment d'imprégnation aqueux.

Selon l'invention, le procédé ressort de la revendication 1.

Grâce à l'invention le composé surfactant anionique porte des charges actives négatives et empêche ainsi l'agrégation des différentes particules de poudres chargées négativement.

Selon d'autres caractéristiques de l'invention pouvant être prises séparément ou dans toutes leurs combinaisons techniques possibles :
- le ciment aqueux contient un composé surfactant de type non ionique et un composé surfactant de type anionique.
- le composé de type surfactant anionique est choisi parmi le groupe des phosphates, des polyphosphates, des pyrophosphates, des sulfates, des sulphonates et des carboxylates.
- le cation du composé de type surfactant anionique est choisi parmi les éléments sodium+, potassium+, ammonium+, calcium++ et amines.
- le composé de type surfactant non ionique est choisi parmi le groupe des hydroxyls, des éthers.
- le composé de type surfactant non ionique est un ether de polyglycol.
- le composé de type surfactant anionique est un mélange de polyphosphates de potassium.
- le composé de type surfactant anionique est un mélange de polyphosphates de sodium.
- le composé de type surfactant anionique est un mélange de pyrophosphates de potassium.
- le composé de type surfactant anionique est un mélange de pyrophosphates de sodium.
- le pourcentage pondéral des composés de type surfactant anionique par rapport au latex SBR sec est inférieur à 6%.
- le pourcentage pondéral des composés de type surfactant anionique par rapport au mélange sec est inférieur à 5%.
- le pourcentage pondéral des composés de type surfactant anionique par rapport à la garniture finie est inférieur à 3%.
- le pourcentage pondéral des composés de type surfactant non ionique par rapport au latex SBR sec est inférieur à 3%.
- le pourcentage pondéral des composés de type surfactant non ionique par rapport au mélange sec est inférieur à 2%.
- le pourcentage pondéral des composés de type surfactant non ionique par rapport à la garniture finie est inférieur à 1.2%.
- le fil comporte au moins un fil de verre élémentaire texturé.
- la texture du fil de verre texturé est de 600 à 5000 tex.
- le fil comprend du fil métallique.

On a pu constater que, grâce à l'invention, la durée pendant laquelle le ciment peut être utilisé pour réaliser l'imprégnation du fil servant à constituer le squelette et l'ébauche de la couronne, est considérablement augmenté : il se trouve multiplié par un facteur de l'ordre de 10.

De plus, on note une stabilité des caractéristiques physico-chimiques du ciment pendant tout le temps d'utilisation, ce qui a pour conséquence avantageuse une qualité améliorée et constante du produit final, c'est-à-dire de la couronne de frottement.

Egalement, les composés surfactants agissant comme tampon, protègent le système émulsifiant du latex SBR tout en émulsifiant les autres charges du ciment.

D'autres caractéristiques et avantages de l'invention apparaîtrons dans la description d'exemples de mise en oeuvre de l'invention en références aux figures annexées qui représentent :
- la figure 1, l'évolution de la viscosité d'un mélange base latex SBR maintenu à 20°C.
- la figure 2, l'évolution de la viscosité d'un mélange base latex SBR maintenu à 45°C.
- la figure 3, l'application d'un composé surfactant sur une poudre chargée négativement.

Des couronnes pour disque de friction d'embrayage à frottement à sec, destiné à un véhicule automobile, sont réalisées comme indiqué ci-après.

Un ciment aqueux est réalisé en mélangeant divers constituants. Le mélange est effectué en deux étapes.

Un pré-mélange est tout d'abord constitué en mélangeant des charges notamment sous forme de poudres, des résines phénolique et mélamine-formol avec de l'eau.

On introduit également dans ce pré-mélange des composés surfactants anioniques tel que par exemple, des phosphates, des sulfates des sulphonates ou des carboxylates. Les cations utilisés pouvant être du sodium+, du potassium+, de l'ammonium+, du calcium++ ou des amines.

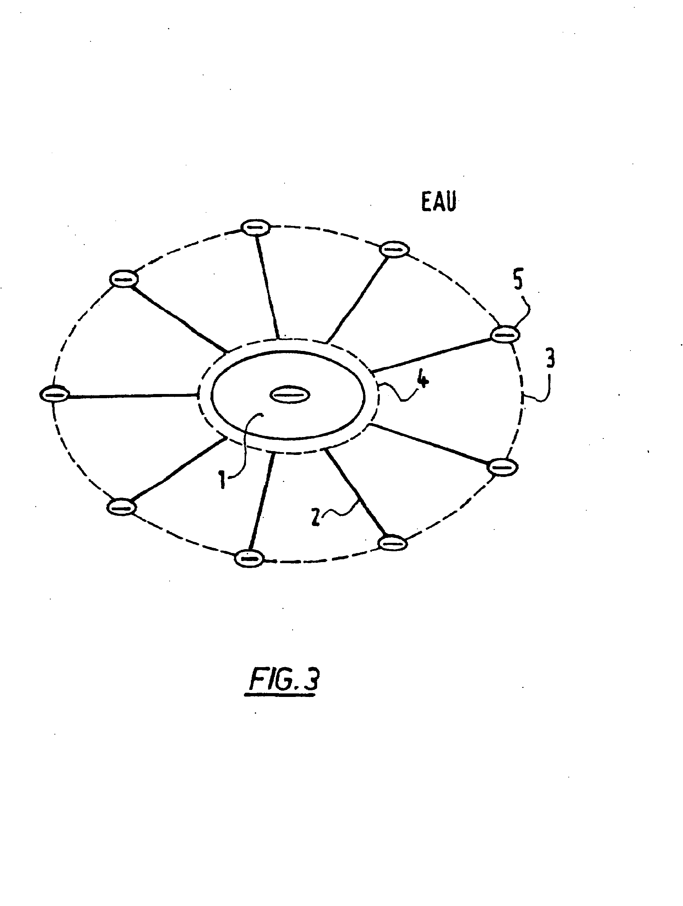

En référence à la figure 3, la plupart des poudres 1 utilisées étant chargées négativement, le composé surfactant anionique 2 portant une charge active négative 5, produit par la même une barrière 3 qui empêche l'agrégation des différentes particules de poudres.

De même, ce composé surfactant agit en s'adsorbant sur les poudres, en particulier celles à forte surface spécifique (tel que le noir de carbone, résine finement broyée ...). Par ce biais, il forme un nouvel interface poudre/eau 4 et évite ainsi aux charges à forte surface spécifique d'adsorber l'eau, et notamment celle du latex, et permet ainsi de réduire les risques de déstabilisation du latex.

Avantageusement, le composé surfactant agit aussi comme tampon en maintenant le PH des mélanges. Le latex, qui est sensible à toute variation de PH voit ainsi sa stabilité renforcée.

Ces composés surfactants anioniques sont introduits à raison de 3 % maximum en poids du mélange aqueux. Ce pourcentage dépends de la quantité de poudres, de leurs charges électriques et de leurs surfaces spécifiques et également de la quantité de latex et du PH du latex.

La couronne de friction ainsi obtenue, présente un pourcentage pondéral de composé surfactant anionique par rapport au latex SBR sec inférieur à 6 %, soit un pourcentage pondéral de composé surfactant anionique par rapport au mélange sec, c'est à dire ciment sec sans le fil, inférieur à 5 %, ou encore, un pourcentage pondéral de composé surfactant anionique par rapport à la garniture finie, comprenant le fil et le ciment sec, inférieur à 3 %.

Avantageusement, on peut également introduire dans ce pré-mélange des composés surfactants non ioniques tels que par exemple, des composés surfactants possédant des groupes hydroxyls (R-OH) et des esthers (R-O-R).

Ces composés surfactants non ioniques vont surtout agir pour réduire le temps de mélange du ciment pour obtenir une dispersion homogène. Ils sont parfaitement compatibles avec les composés surfactants anioniques avec lesquels ils présentent une forte synergie.

Avantageusement, ces composés surfactants non ioniques sont introduits à raison de 1% maximum en poids du mélange aqueux.

La couronne de friction ainsi obtenue, présente un pourcentage pondéral de composé surfactant non ionique par rapport au latex SBR sec inférieur à 3 %, soit un pourcentage pondéral de composé surfactant non ionique par rapport au mélange sec, c'est à dire ciment sec sans le fil, inférieur à 2 %, ou encore, un pourcentage pondéral de composé surfactant non ionique par rapport à la garniture finie, comprenant le fil et le ciment sec, inférieur à 1.2 %.

Dans un mode préféré de l'invention on introduit dans le mélange de la phosphate, (avantageusement sous la forme d'un mélande de polyphosphates de sodium ou de potassium, ou, sous la forme d'un mélange de pyrophosphates de sodium ou de potassium) et de l'eau. Le temps du mélangeage est déterminé de manière que le mélange soit homogène et que la résine phénolique soit entièrement dissoute.

Pour former le mélange final, du latex SBR est introduit dans le pré-mélange en faisant en sorte d'obtenir un mélange homogène.

Un fil constitué à base de fibres minérales, telles que des fibres de verre, de fibres organiques, telles que des fibres de polyacrylonitrile ou dérivées, et de fils métalliques dont la teneur peut aller jusqu'à 75 % du poids de la couronne est plongé dans le ciment pour en être imprégné.

Le fil imprégné est ensuite séché.

Une ébauche de couronne de friction est obtenue en distribuant le fil imprégné en lobes entre un diamètre extérieur et un diamètre intérieur.

L'ébauche subit ensuite une cuisson sous pression.

Une post-cuisson est avantageusement prévue pour stabiliser le produit.

Des usinages divers tels que rectifications, perçages, ainsi qu'ensuite un traitement anti-poussière, sont réalisés.

Des couronnes ainsi obtenues sont destinées à être montées de part et d'autre d'un support à élasticité axiale d'un disque de friction d'embrayage.

De manière plus précise, cinq échantillons de ciment sont réalisés comme indiqué ci-dessus, à partir des composants dont les proportions sont indiquées dans les tableau ci-dessous, tout d'abord en partie en poids, puis, respectivement, en pourcentage en poids par rapport au latex sec SBR, au mélange aqueux, au mélange sec et enfin, en pourcentage en poids dans la garniture d'embrayage.

Des mesures de l'évolution de la viscosité des mélanges sont réalisées au moyen d'un viscosimètre « Brookfield », aux températures de 20°C et 45°C.

Les mesures d'évolution de la viscosité au cours du temps ont été réalisées sur ces cinq mélanges. D'une part, un mélange Témoin ne comportant pas de composés surfactants sous quelque forme que ce soit. D'autre part, quatre mélanges comprenant des composés surfactants, ici sous forme d'un mélange de polyphosphates de sodium. Le cinquième mélange présenté par la formule 4 contient en plus par rapport aux autres mélanges un composé surfactant non ionique à base d'Ether de polyglycol.

| | - Parties en poids des ingrédients du ciment d'imprégnation (base 100 pour le latex sec) | | | | |
|---|---|---|---|---|---|
| Ingrédients | Témoin | Formule 1 | Formule 2 | Formule 3 | Formule 4 |
| Latex SBR | 100 | 100 | 100 | 100 | 100 |
| Poudres | 400 | 400 | 400 | 400 | 400 |
| Polyphosphate de sodium | 0 | 1 | 5 | 25 | 1 |
| Ether de polyglycol | 0 | 0 | 0 | 0 | 1 |
| Eau totale du mélange | 210 | 210 | 210 | 210 | 210 |

| | | | | | |
|---|---|---|---|---|---|
| | % poids des surfactants par rapport au latex SBR sec | | | | |
| Ingrédients | Témoin | Formule 1 | Formule 2 | Formule 3 | Formule 4 |
| Polyphosphate de sodium | 0 | 1 % | 5 % | 25 % | 1 % |
| Ether de polyglycol | 0 | 0 | 0 | 0 | 1 % |

| | | | | | |
|---|---|---|---|---|---|
| | % poids des surfactants par rapport au mélange aqueux | | | | |
| Ingrédients | Témoin | Formule 1 | Formule 2 | Formule 3 | Formule 4 |
| Polyphosphate de sodium | 0 | 0.14 % | 0.7 % | 3.5 % | 0.14 % |
| Ether de polyglycol | 0 | 0 | 0 | 0 | 0.14 % |

| | | | | | |
|---|---|---|---|---|---|
| | % poids des surfactants par rapport au mélange aqueux | | | | |
| Ingrédients | Témoin | Formule 1 | Formule 2 | Formule 3 | Formule 4 |
| Polyphosphate de sodium | 0 | 0.2 % | 1 % | 5 % | 0.2 % |
| Ether de polyglycol | 0 | 0 | 0 | 0 | 0.2 % |

| | | | | | |
|---|---|---|---|---|---|
| | % poids des surfactants par rapport au mélange aqueux | | | | |
| Ingrédients | Témoin | Formule 1 | Formule 2 | Formule 3 | Formule 4 |
| Polyphosphate de sodium | 0 | 0.12 % | 0.6 % | 3 % | 0.12 % |
| Ether de polyglycol | 0 | 0 | 0 | 0 | 0.12 % |

| | | | | | |
|---|---|---|---|---|---|
| | % poids des surfactants dans la garniture d'embrayage | | | | |
| Ingrédients | Témoin | Formule 1 | Formule 2 | Formule 3 | Formule 4 |
| Polyphosphate de sodium | 0 | 0.12 % | 0.6 % | 3 % | 0.12 % |
| Ether de polyglycol | 0 | 0 | 0 | 0 | 0.12 % |

| | | | | | |
|---|---|---|---|---|---|
| Temps de mélange des poudres pour obtenir une dispersion homogène | 15 mn | 12 mn | 12 mn | 10 mn | 8 mn |

Comme on peut le voir dans le tableau ci-dessus, la formule 4 qui contient, en plus des autres formules, du composé surfactant non ionique, nécessite un temps de mélange des poudres pour obtenir une dispersion homogène nettement inférieur aux autres formules sans composé surfactant non ionique.

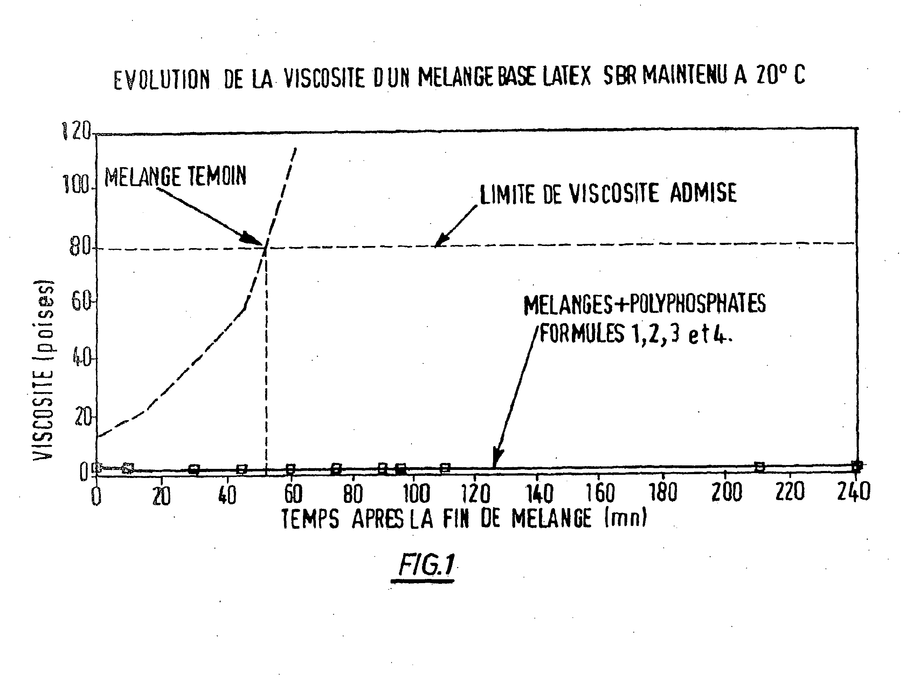

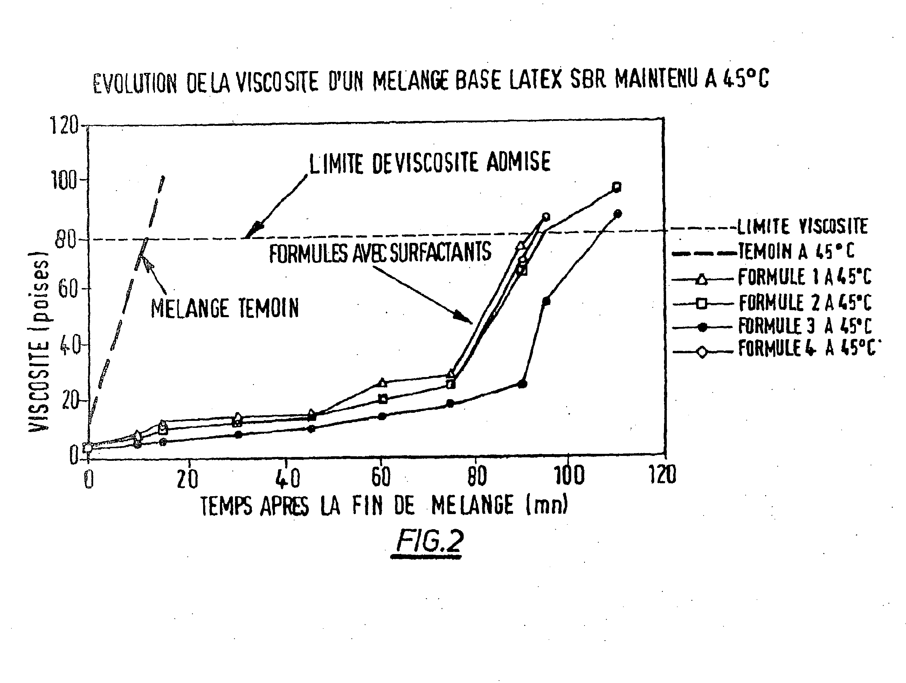

Les résultats de ces mesures sont reportés sur les graphiques des figure 1 et figure 2.

Sachant qu'en pratique une imprégnation correcte d'un fil du type indiqué précédemment est obtenu avec un ciment dont la viscosité est inférieure à 80 poises et de manière optimale inférieure à 40 poises, on constate sur les graphiques de la figure 1 que pour un mélange maintenu à 20°C, la durée d'utilisation du mélange Témoin, comptée à partir de la constitution de celui-ci, réalisé conformément à l'état de la technique, c'est-à-dire en utilisant une résine phénolique et sans apport de composé surfactant, nous avons une durée d'utilisation très courte, inférieure à 50 mn (en prenant 80 poises comme limite maximum). Pour une viscosité optimale inférieure à 40 poises et avec un mélange Témoin maintenu à 20°C, la figure 1 nous indique que le temps d'utilisation descend bien en dessous de 40 mn. Par contre, dans ces même conditions, les mélanges représentés par les formules 1, 2, 3 et 4 présente une viscosité quasiment inchangée au moins durant les 4 heures comptées à partir de la fin de la préparation du mélange.

En référence à la figure 2, pour un mélange Témoin maintenu à 45°C, réalisé conformément à l'état de la technique, c'est-à-dire en utilisant une résine phénolique et sans apport de composé surfactant, nous avons une durée d'utilisation du mélange témoin, comptée à partir de la constitution de celui-ci, très courte inférieure à 15 mn C (avec une limite maximum de 80 poises). En considérant une viscosité maximale de 40 poises et avec un mélange Témoin maintenu à 45°C, la figure 2 nous indique que le temps d'utilisation descend à 5 mn. Par contre, dans ces même conditions, les mélanges représentés par les formules 1, 2, 3 et 4 atteignent la viscosité limite admise de 80 poises entre 90 mn et 110 mn.

Des tests complémentaires, non relatés ici, ont permis de définir une plage préférée correspondant à un pourcentage pondéral des composés surfactants par rapport au latex SBR sec compris entre 0,1% et 3% permettant au mélange constituant le ciment d'atteindre les propriétés émulsifiantes idéales pour une bonne imprégnation du fil par une imprégnation plus régulière et plus à coeur qui conduisent à des performances plus fiables.

Les avantages selon l'invention sont, d'une part, une imprégnation plus riche du fil et, d'autre part, un séchage plus rapide de celui-ci après imprégnation.

L'invention permet avantageusement l'imprégnation d'un fil composite comprenant au moins un fil de verre élémentaire texturé (de préférence de 1 à 3 fils texturés de 600 à 5000 tex). Avec le ciment réalisé selon l'invention, on obtient avec ce type de fil une meilleure imprégnation qui a pour conséquence une plus grande résistance de la couronne d'embrayage, réalisée à partir d'un tel fil imprégné, aux effets de la force centrifuge.

On peut constater que l'invention améliore notablement la résistance à la centrifugation et que celle-ci est particulièrement importante en combinant fil texturé et ciment aqueux comprenant des composés surfactants.

Avec l'utilisation de latex SBR on cumule tous les avantages précités.

## Revendications

1. Procédé de fabrication d'un matériau de friction, plus particulièrement d'une couronne de friction pour disque de friction d'embrayage travaillant à sec, comportant une opération d'imprégnation d'un fil à base notamment de fibres minérales telles que des fibres de verre, au moyen d'un ciment d'imprégnation aqueux, dans lequel le ciment aqueux contient au moins un composé du type surfactant et des charges, **caractérisé en ce que** le composé de type surfactant est anionique et **en ce que** la réalisation du ciment d'imprégnation comporte la formation d'un pré-mélange comprenant des charges, de la résine phénolique, du composé de type surfactant et de l'eau et l'adjonction à ce pré-mélange de latex SBR.

2. Procédé de fabrication d'un matériau de friction selon la revendication 1, **caractérisé en ce que** le ciment aqueux contient un composé surfactant de type non ionique et un composé surfactant de type anionique.

3. Procédé de fabrication d'un matériau de friction selon l'une quelconque des revendications 1 ou 2, **caractérisé en ce que** le composé de type surfactant anionique est choisi parmi le groupe des phosphates, des polyphosphates, des pyrophosphates, des sulfates, des sulphonates et des carboxylates.

4. Procédé de fabrication d'un matériau de friction selon l'une quelconque des revendications 1, 2 ou 3, **caractérisé en ce que** le cation du composé de type surfactant anionique est choisi parmi les éléments sodium+, potassium+, ammonium+, calcium++ et amines.

5. Procédé de fabrication d'un matériau de friction selon l'une quelconque des revendications 1 ou 2, **caractérisé en ce que** le composé de type surfactant non ionique est choisi parmi le groupe des hydroxyls, des éthers.

6. Procédé de fabrication d'un matériau de friction selon l'une quelconque des revendications 1, 2 ou 5, **caractérisé en ce que** le composé de type surfactant non ionique est un ether de polyglycol.

7. Procédé de fabrication d'un matériau de friction selon l'une quelconque des revendications 1 à 4, **caractérisé en ce que** le composé de type surfactant anionique est un mélange de polyphosphates de potassium ou un mélange de polyphosphates de sodium ou un mélange de pyrophosphates de potassium ou un mélange de pyrophosphates de sodium.

8. Procédé de fabrication d'un matériau de friction selon l'une quelconque des revendications 1, 2, 3, 4, ou 7, **caractérisé en ce que** le pourcentage pondéral des composés de type surfactant anionique par rapport au latex SBR sec est inférieur à 6%.

9. Procédé de fabrication d'un matériau de friction selon l'une quelconque des revendications 1, 2, 3, 4, ou 7, **caractérisé en ce que** le pourcentage pondéral des composés de type surfactant anionique par rapport au mélange sec est inférieur à 5%.

10. Procédé de fabrication d'un matériau de friction selon l'une quelconque des revendications 1, 2, 3, 4, ou 7 **caracterisé en ce que** le pourcentage pondéral des composés de type surfactant anionique par rapport à la garniture finie est inférieur à 3%.

11. Procédé de fabrication d'un matériau de friction selon l'une quelconque des revendications 1, 2, 5, 6 **caractérisé en ce que** le pourcentage pondéral des composés de type surfactant non ionique par rapport au latex SBR sec est inférieur à 3%.

12. Procédé de fabrication d'un matériau de friction selon l'une quelconque des revendications 1, 2 , 5, 6 **caractérisé en ce que** le pourcentage pondéral des composés de type surfactant non ionique par rapport au mélange sec est inférieur à 2%.

13. Procédé de fabrication d'un matériau de friction selon l'une quelconque des revendications 1, 2, 5, 6 **caractérisé en ce que** le pourcentage pondéral des composés de type surfactant non ionique par rapport à la garniture finie est inférieur à 1.2%.

14. Procédé selon l'une quelconque des revendications précédentes, **caractérisé en ce que** le fil comporte au moins un fil de verre élémentaire texturé.

15. Procédé selon la revendication 14, **caractérisé en ce que** la texture du fil de verre texturé est de 600 à 5000 tex.

16. Procédé selon l'une quelconque des revendications précédentes **caractérisé en ce que** le fil comprend du fil métallique.

## Claims

1. A method of making a friction material, more particularly a material for a friction crown for a dry friction clutch disc, comprising an operation of impregnating, with an aqueous impregnation cement, a yarn of which the basis consists in particular of mineral fibres such as glass fibres, wherein the aqueous cement contains at least one component of the surfactant type together with fillers, **characterised in that** the surfactant component is anionic, and **in that** the process of making the impregnation cement includes the formation of a preliminary mixture comprising fillers, phenolic resin, the surfactant component and water, and the addition of SBR latex to the said preliminary mixture.

2. A method of making a friction material according to Claim 1, **characterised in that** the aqueous cement contains a surfactant component of a non-ionic type, together with a surfactant component of an anionic type.

3. A method of making a friction material according to Claim 1 or Claim 2, **characterised in that** the anionic surfactant component is selected from the group of phosphates, polyphosphates, pyrophosphates, sulphates, sulphonates and carboxylates.

4. A method of making a friction material according to any one of Claims 1, 2 or 3 , **characterised in that** the cation of the anionic surfactant component is selected from the elements sodium+, potassium+, ammonium+, calcium++, and amines.

5. A method of making a friction material according to Claim 1 or Claim 2, **characterised in that** the non-ionic surfactant component is selected from the group of hydroxyls and ethers.

6. A method of making a friction material according to any one of Claims 1, 2 or 5, **characterised in that** the non-ionic surfactant component is a polyglycol ether.

7. A method of making a friction material according to any one of Claims 1 to 4, **characterised in that** the anionic surfactant component is a mixture of potassium polyphosphates, or a mixture of sodium polyphosphates, or a mixture of potassium pyrophosphates, or a mixture of sodium pyrophosphates.

8. A method of making a friction material according to any one of Claims 1, 2, 3, 4 or 7, **characterised in that** the percentage by weight of anionic surfactant component, with respect to the dry SBR latex, is less than 6%.

9. A method of making a friction material according to any one of Claims 1, 2, 3, 4 or 7, **characterised in that** the percentage by weight of the anionic surfactant components with respect to the dry mixture is less than 5%.

10. A method of making a friction material according to any one of Claims 1, 2, 3, 4 or 7, **characterised in that** the percentage by weight of the anionic surfactant components with respect to the finished liner is less than 3%.

11. A method of making a friction material according to any one of Claims 1, 2, 5 or 6, **characterised in that** the percentage by weight of the non-ionic surfactant components with respect to the dry SBR latex is less than 3%.

12. A method of making a friction material according to any one of Claims 1, 2, 5 or 6, **characterised in that** the percentage by weight of the non-ionic surfactant components with respect to the dry mixture is less than 2%.

13. A method of making a friction material according to any one of Claims 1, 2, 5 or 6, **characterised in that** the percentage by weight of the non-ionic surfactant components with respect to the finished liner is less than 1.2%.

14. A method according to any one of the preceding Claims, **characterised in that** the yarn comprises at least one textured elementary glass filament.

15. A method according to Claim 14, **characterised in that** the texture of the textured glass filament is in the range from 600 to 5000 tex.

16. A method according to any one of the preceding Claims, **characterised in that** the yarn includes metallic fibre.

## Patentansprüche

1. Verfahren zur Herstellung eines Reibmaterials, insbesondere eines Reibrings für eine mit Trockenreibung arbeitende Reibungskupplungsscheibe, das einen Vorgang zur Imprägnierung eines Garns insbesondere auf der Basis von Mineralfasern, wie etwa Glasfasern, mittels eines wässrigen Imprägnierkitts umfasst, wobei der wässrige Kitt wenigstens eine Verbindung des Typs Tensid und Füllstoffe enthält, **dadurch gekennzeichnet, dass** die Verbindung des Typs Tensid anionisch ist, und dass die Ausführung des Imprägnierkitts die Bildung einer Vormischung mit Füllstoffen, Phenolharz, einer Verbindung des Typs Tensid und Wasser sowie die Zugabe von SBR-Latex zu dieser Vormischung umfasst.

2. Verfahren zur Herstellung eines Reibmaterials nach Anspruch 1, **dadurch gekennzeichnet, dass** der wässrige Kitt eine Tensidverbindung nichtionischen Typs und eine Tensidverbindung anionischen Typs enthält.

3. Verfahren zur Herstellung eines Reibmaterials nach einem der Ansprüche 1 oder 2, **dadurch gekennzeichnet, dass** die Verbindung des Typs anionisches Tensid aus der Gruppe der Phosphate, Polyphosphate, Pyrophosphate, Sulfate, Sulphonate und Carboxylate ausgewählt wird.

4. Verfahren zur Herstellung eines Reibmaterials nach einem der Ansprüche 1, 2 oder 3, **dadurch gekennzeichnet, dass** das Kation der Verbindung des Typs anionisches Tensid aus den Elementen Natrium⁺, Kalium⁺, Ammonium⁺, Calcium⁺⁺ und Amine ausgewählt wird.

5. Verfahren zur Herstellung eines Reibmaterials nach einem der Ansprüche 1 oder 2, **dadurch gekennzeichnet, dass** die Verbindung des Typs nichtionisches Tensid aus der Gruppe der Hydroxyle, der Ether ausgewählt wird.

6. Verfahren zur Herstellung eines Reibmaterials nach einem der Ansprüche 1, 2 oder 5, **dadurch gekennzeichnet, dass** die Verbindung des Typs nichtionisches Tensid ein Polyglykolether ist.

7. Verfahren zur Herstellung eines Reibmaterials nach einem der Ansprüche 1 bis 4, **dadurch gekennzeichnet, dass** die Verbindung des Typs anionisches Tensid eine Mischung von Kaliumpolyphosphaten oder eine Mischung von Natriumpolyphosphaten oder eine Mischung von Kaliumpyrophosphaten oder eine Mischung von Natriumpyrophosphaten ist.

8. Verfahren zur Herstellung eines Reibmaterials nach einem der Ansprüche 1, 2, 3, 4 oder 7, **dadurch gekennzeichnet, dass** der prozentuale Gewichtsanteil der Verbindungen des Typs anionisches Tensid im Verhältnis zum Trocken-SBR-Latex kleiner als 6% ist.

9. Verfahren zur Herstellung eines Reibmaterials nach einem der Ansprüche 1, 2, 3, 4 oder 7, **dadurch gekennzeichnet, dass** der prozentuale Gewichtsanteil der Verbindungen des Typs anionisches Tensid im Verhältnis zur Trockenmischung kleiner als 5% ist.

10. Verfahren zur Herstellung eines Reibmaterials nach einem der Ansprüche 1, 2, 3, 4 oder 7, **dadurch gekennzeichnet, dass** der prozentuale Gewichtsanteil der Verbindungen des Typs anionisches Tensid im Verhältnis zum fertigen Reibbelag kleiner als 3% ist.

11. Verfahren zur Herstellung eines Reibmaterials nach einem der Ansprüche 1, 2, 5, 6, **dadurch gekennzeichnet, dass** der prozentuale Gewichtsanteil der Verbindungen des Typs nichtionisches Tensid im Verhältnis zum Trocken-SBR-Latex kleiner als 3% ist.

12. Verfahren zur Herstellung eines Reibmaterials nach einem der Ansprüche 1, 2, 5, 6, **dadurch gekennzeichnet, dass** der prozentuale Gewichtsanteil der Verbindungen des Typs nichtionisches Tensid im Verhältnis zur Trockenmischung kleiner als 2% ist.

13. Verfahren zur Herstellung eines Reibmaterials nach einem der Ansprüche 1, 2, 5, 6, **dadurch gekennzeichnet, dass** der prozentuale Gewichtsanteil der Verbindungen des Typs nichtionisches Tensid im Verhältnis zum fertigen Reibbelag kleiner als 1,2% ist.

14. Verfahren nach einem der vorangehenden Ansprüche, **dadurch gekennzeichnet, dass** das Garn wenigstens eine texturierte Elementar-Glasfaser umfasst.

15. Verfahren nach Anspruch 14, **dadurch gekennzeichnet, dass** die Textur der texturierten Glasfaser bei 600 bis 5000 tex liegt.

16. Verfahren nach einem der vorangehenden Ansprüche, **dadurch gekennzeichnet, dass** das Garn Metallgarn enthält.
